# EUROPÄISCHE PATENTANMELDUNG

(11) **EP 0 795 714 A1**
(43) Veröffentlichungstag der Anmeldung: **17.09.1997**
(21) Anmeldenummer: 97104025.8
(22) Anmeldetag: 11.03.1997
(51) Int. Cl.: F16L 55/162

(54) **Aufweitbare Schale zur innenseitigen Kanalrohrsanierung**

(30) Priorität: 16.03.1996 DE 19610477
(71) Anmelder: RICO GESELLSCHAFT FüR MIKROELEKTRONIK mbH, D-87437 Kempten (DE)
(72) Erfinder: Brakland, Christoph, 87471 Durach (DE)
(74) Vertreter: Hübner, Hans-Joachim, Dipl.-Ing.

(57) **Zusammenfassung**

Eine rohrförmige Metallschale (10) mit einander überlappenden Enden, die zur Innenauskleidung von beschädigten Kanalrohren (22) dient, weist einen zwischen zwei Endabschnitten (16) liegenden Mittelabschnitt (18) auf, der durch eine Vielzahl achsparalleler Schlitze einen geringeren Verformungswiderstand hat als die Endabschnitte (16). Wird eine solche Schale (10) in ein Kanalrohr mit Muffenversatz so eingebaut, daß der materialgeschwächte Zwischenabschnitt (18) der Schale (10) in den Bereich des Radialversatzes gelangt, so kann sich dieser Zwischenabschnitt (18) verformen und bildet dann einen Übergang zwischen den beiden radialversetzten Kanalrohrstücken (24, 26). Mindestens der Zwischenbereich (18) ist ringsum mit einer elastischen Dichtmasse oder eines Schlauches abgedichtet. Die Reparaturschale (10) eignet sich besonders zum Abdichten von Kanalrohren mit Muffenversatz.

## Beschreibung

Die Erfindung betrifft eine aufweitbare Schale, insbesondere aus Metallblech mit einander überlappenden Längsrändern zur innenseitigen Kanalrohrsanierung, wobei die Schale zwei Endabschnitte und einen, diese miteinander zu einem zusammenhängenden Bauteil verbindenden Zwischenabschnitt aufweist und den Endabschnitten jeweils eine, eine Durchmesservergrößerung der Schale zulassende, jedoch in entgegengesetzter Richtung formschlüssig sperrende Sperrverrastung zugeordnet ist, die eine benachbart eines Längsrandes beginnende und sich in Umfangsrichtung erstreckende Schlitz-/Steganordnung mit achsparallelen Schlitzen und/oder Stegen aufweist.

Eine derartige Schale ist aus der WO 95/15460 bekannt. Einen ähnlichen Stand der Technik zeigen die DE-U-8707049 und 9313379 sowie die EP-A-0101258. Solche Schalen werden außenseitig mit einem Dichtmittel und/oder mit einem Klebstoffauftrag versehen, nachdem innenseitig ein sogenannter Packer eingefahren ist. Mittels eines Zugseiles wird dann der Packer mit der ihn umgebenden Schale im Kanal in Position gebracht, wo der Packer über eine mitgeschleppte Druckluftleitung aufgeblasen wird, wobei sich die Schale aufweitet und an dem zu sanierenden Rohrstück anliegt. Die Sperrverrastung sorgt dafür, daß die Schale diese Position beibehält, auch wenn dann der Packer wieder entfernt wird.

In geraden Kanalrohren lassen sich die bekannten Schalen mit gutem Erfolg einsetzen, um z.B. Wandungsrisse abzudichten. In der Praxis treten aber häufig Kanalschäden auf, bei denen zwei benachbarte Rohrstücke einen Radialversatz aufweisen. In vielen Fällen handelt es sich um einen Rohrmuffenversatz. Solche Schäden können mit den bekannten Reparaturschalen nicht behoben werden, da die Schalen im verrasteten und außenseitig abgestützten Zustand einen hohen Verformungswiderstand ähnlich demjenigen eines umfangmäßig geschlossenen Rohres aufweisen und sich somit nicht biegen lassen. Die Schalen würden eine Winkellage in beiden miteinander zu verbindenden Kanalrohrstücken einnehmen, könnten sich nicht auf den Innendurchmesser der Kanalrohrstücke aufweiten und hätten nur punktförmige Anlagestellen an den Kanalrohren.

Aufgabe der Erfindung ist es, die bekannte Schale derart auszubilden, daß sie auch bei Rohr- und Rohrmuffenversätzen eingesetzt werden kann, um solche Schadstellen abzudichten.

Diese Aufgabe wird bei einer Schale der eingangs genannten Art dadurch gelöst, daß der Zwischenabschnitt der Schale dem Biegen um ihre Längsachse einen geringeren Verformungswiderstand entgegensetzt als die Endabschnitte der Schale. Erfindungsgemäß wird also die Schale in drei Abschnitte unterteilt, wobei der zwischen den beiden Endabschnitten liegende Zwischenabschnitt einen geringeren Verformungswiderstand als die Endabschnitte aufweist. Die Herabsetzung des Verformungswiderstandes kann durch Materialschwächung und/oder faltbalgartige Ausbildung erfolgen. Eine Materialschwächung läßt sich durch Materialabtrag genauso erzeugen wie durch Ausstanzen eines Lochmusters.. So liegt es im Rahmen der Erfindung, die Schale mit einem gegenüber ihren Endabschnitten dünnwandigeren Zwischenabschnitt auszubilden, etwa derart, daß dieser mit den dickeren Endabschnitten verschweißt oder verklebt bzw. vernietet wird. Die Schale kann aber auch aus einem einstückigen Blechzuschnitt gefertigt werden, bei dem der Zwischenabschnitt durch Laser- oder Elektroerosion oder durch eine chemische oder elektrochemische Behandlung in seiner Materialstärke reduziert wird. Die Materialschwächung muß nicht notwendigerweise um den ganzen Schalenumfang herum gleichmäßig sein, denn der Biegewiderstand einer Schale ist in der, rechtwinklig zum Muffenversatz liegenden Ebene erheblich größer als in der Achsversatzebene. Somit liegt es im Rahmen der Erfindung, den Zwischenabschnitt der Schale wenigstens mit zwei einander wenigstens angenähert diametral gegenüberliegenden Schwächungszonen zu versehen. Diese Schwächungszonen würden sich im Einbauzustand der Schale beidseitig der rechtwinklig zum Radialversatz der Rohre liegenden Ebene erstrecken. Die stärkste Materialschwächung sollte in dieser Ebene liegen und kann sich längs des Umfanges in beiden Richtungen allmählich verringern.

Gemäß einer Ausgestaltung der Erfindung weist der Zwischenabschnitt der Schale ein sich ringsum erstreckendes Lochmuster auf und zwar derart, daß der Zwischenabschnitt gitter- oder siebartig ausgebildet ist. Dank der verbleibenden Gitterstege im Zwischenabschnitt ist dieser leicht verformbar und paßt sich beim Einbau der Schale dem Muffenversatz an, so daß die beiden Endabschnitte der Schale in den beiden Kanalrohrstücken jeweils koaxial liegen. Der materialgeschwächte Zwischenabschnitt der Schale verformt sich beim Einbau der Schale zu einem stetigen Übergang zwischen den beiden zylindrischen Endabschnitten. Diese sich beim Einbau der Schale ergebende Gestalt wird begünstigt, wenn der Verformungswiderstand des Zwischenabschnittes in seinem Mittelbereich am kleinsten ist und zu den Endabschnitten hin, also in axialer Richtung zunimmt.

Eine faltenbalgartige Ausbildung des Zwischenabschnittes der Schale ermöglicht eine Streckung des Zwischenabschnittes längs einer Mantellinie und eine Stauchung an der diametral gegenüberliegenden Mantellinie und somit eine Biegung des Zwischenabschnittes. Der Mantel des Zwischenabschnittes hat dann einen wellenförmigen Querschnitt und es versteht sich, daß die Amplituden klein sind im Verhältnis zum Schalendurchmesser. Die Amplitudengröße beträgt höchstens 5% des Schalendurchmessers.

Eine Art Faltenbalgausbildung des Zwischenabschnittes läßt sich aber auch dadurch erzeugen, daß der Zwischenabschnitt mit dicht benachbarten Umfangsrillen an der Innenseite und/oder der Außenseite versehen wird, wobei bei beidseitiger Rillenanordnung die Rillen an einer Seite zu denen auf der anderen Seite jeweils auf Lücke gesetzt sind. Diese Rillen können durch Materialabtrag erzeugt werden, womit eine starke Verringerung des Verformungswiderstandes erreicht wird. Sie können aber auch durch Prägungen während des Rundbiegens der Schale erzeugt werden, ohne daß eine Materialschwächung eintritt. Im letzteren Fall geht die Reduzierung des Verformungwiderstandes des Zwischenabschnittes ganz oder wenigstens zum allergrößten Teil auf die spezielle Formgebung des im Axialschnitt wellenförmigen Mantels im Zwischenabschnitt zurück.

Löcher im Zwischenabschnitt der Schale würden zwar dem Abdichtungsziel widersprechen, jedoch wird bei der erfindungsgemäßen Schale die Abdichtung von der auf die Schale außen aufgebrachten elastischen Ein-Komponenten-Polyurethan-Dichtmassen übernommen. Diese bildet eine geschlossene elastische Hülle, die die Schale umgibt. Die Größe der zur Materialschwächung eingebrachten Löcher im Zwischenabschnitt wird so auf die Viskosität der Dichtmasse abgestimmt, daß diese zwar die Löcher ausfüllen kann, beim Aufbringen der Dichtmasse jedoch nicht in das Schaleninnere tropft. Anstelle eines elastischen Dichtmassenauftrages kann - wie an sich bekannt - auch ein Schlauch aus elastischem Material verwendet werden.

Die Erfindung betrifft weiterhin ein Verfahren zur Herstellung einer Reparaturschale für Kanalrohrsanierungen und dieses Verfahren besteht darin, daß ein etwa rechteckiger Blechzuschnitt einen zwischen zwei Endabschnitten liegenden Zwischenabschnitt aufweist, in welchen ein Lochmuster eingebracht wird, während gleichzeitig in den Endabschnitten Verrastungsschlitze gestanzt werden, daß der Zuschnitt zu einer Schale rundgebogen wird und der eine Schalenlängsrand im Bereich der Endabschnitte der Schale in Verrastungsschlitzen benachbart des anderen Längsrandes auf einem kleinen Einbaudurchmesser der Schale verrastet wird und daß die Schale mindestens im Zwischenabschnitt ringsum mit einer elastischen Dichtungsmasse beschichtet wird, die die Löcher im Zwischenabschnitt der Schale ausfüllt. Nach dem Aushärten der Dichtungsmasse bildet diese also eine elastische Außenschale, die innenseitig Noppen aufweist, welche in die Löcher der Metallblechschale eindringen. Die elastische Dichtungschale ist damit formschlüssig an der Metallschale verankert.

Anhand der Zeichnung, die Ausführungsbeispiele der Erfindung darstellt, wird diese näher erläutert.

Es zeigen:
FIG.1 eine dreidimensionale Ansicht einer in ein Kanalrohr mit Muffenversatz eingebrachten Reparaturschale,
   FIG. 1A eine Vergrößerung des Ausschnittes A von FIG. 1,
   FIG. 1B eine Vergrößerung des Ausschnittes B von FIG. 1,
   FIG. 1C eine Vergrößerung des Ausschnittes C von FIG.1,
   FIG. 1D eine Vergrößerung des Ausschnittes D von FIG.1.
FIG. 2 bis FIG. 8 verschiedenartige Lochbilder, die bei der Schale gemäß FIG. 1 verwendet werden können,
FIG. 9 einen Radialschnitt durch ein Kanalrohr mit eingebauter Reparaturschale,
FIG. 10 einen vergrößerten Ausschnitt des in FIG. 9 eingekreisten Bereiches, und
FIG. 11 einen Längsschnitt durch einen Teil einer abgewandelten Schale.

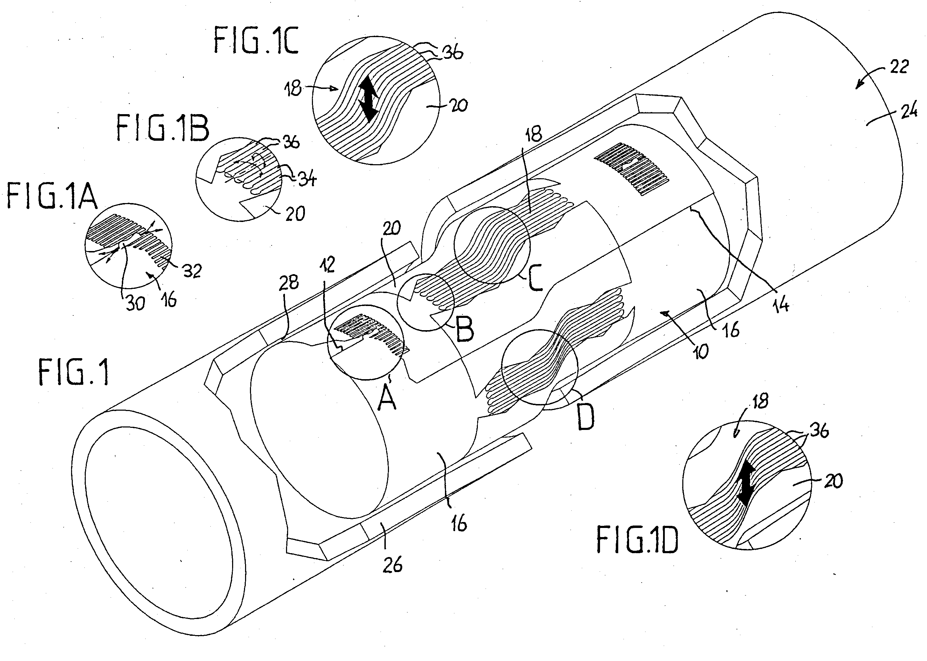

FIG. 1 zeigt eine Schale 10 aus nichtrostendem Stahlblech, die einen inneren Längsrand 12 und einen äußeren Längsrand 14 aufweist. Die Schale 10 hat zwei Endabschnitte 16 und einen dazwischenliegenden einstückig verbundenen Zwischenabschnitt 18. Dieser ist von einer Schicht 20 aus einer Ein-Komponenten-Polyurethan-Dichtmasse umgeben, die in FIG. 1 teilweise weggebrochen dargestellt ist, um die darunterliegende Ausbildung der Schale zu zeigen. Die Schale 10 ist innerhalb eines Kanalrohres 22 dargestellt, zwischen dessen beiden Rohrteilen 24, 26 ein Radialversatz besteht. Zwischen der Schale 10 und den beiden Kanalrohrteilen 24, 26 wird ein Ringspalt 28 gebildet, der im praktischen Einsatzfall mit einem Zweikomponentenkleber auf, Epoxydharzbasis gefüllt ist.

In den beiden Endabschnitten 16 der Schale 10 wird am inneren Längsrand 12 jeweils eine vorstehende Zunge 30 gebildet, die in einen achsparallelen Schlitz einer, Schlitzanordnung 32, eingreift, die sich in dem, dem anderen Längsrand, 14 benachbarten Mantelbereich der Schale 10 befindet. Diese Randzunge 30 und die Schlitzanordnung 32 stellen jeweils eine Sperrverrastung dar. Der Zwischenabschnitt 18 der Schale 10 ist durch eine Vielzahl axialer Schlitze 34 begrenzt. Diese Anordnung gerader axialer Schlitze erstreckt sich um den ganzen Schalenumfang einschließlich des Überlappungsbereiches herum. Zwischen den Schlitzen 34 verbleiben schmale Wandstege 36, die die beiden Endabschnitte 16 der Schale miteinander verbinden. Nach dem Aufweiten der Schale 10 durch den aufgeblasenen, - nicht dargestellten - Packer verformt sich der Zwischenabschnitt 18 der Schale 10 entsprechend dem Rohrversatz. In Richtung des Rohrversatzes (FIG. 1C) verformen sich die Wandstege 36 etwa S-förmig und zwar längs zur Schale. In einer rechtwinklig zum Rohrversatz liegenden Ebene findet eine kombinierte Verformung der Stege 36 statt, wobei auch eine zusätzliche Verformung quer zur Schale stattfindet (FIG. 1D).

Im dargestellten Ausführungsbeispiel bildet die Polyurethan-Dichtmasse 20 eine Hülle, die etwas länger als die Länge des Zwischenabschnittes 18 ist, so daß die Schlitze 34 mit der elastischen Dichtmasse vollständig ausgefüllt sind.

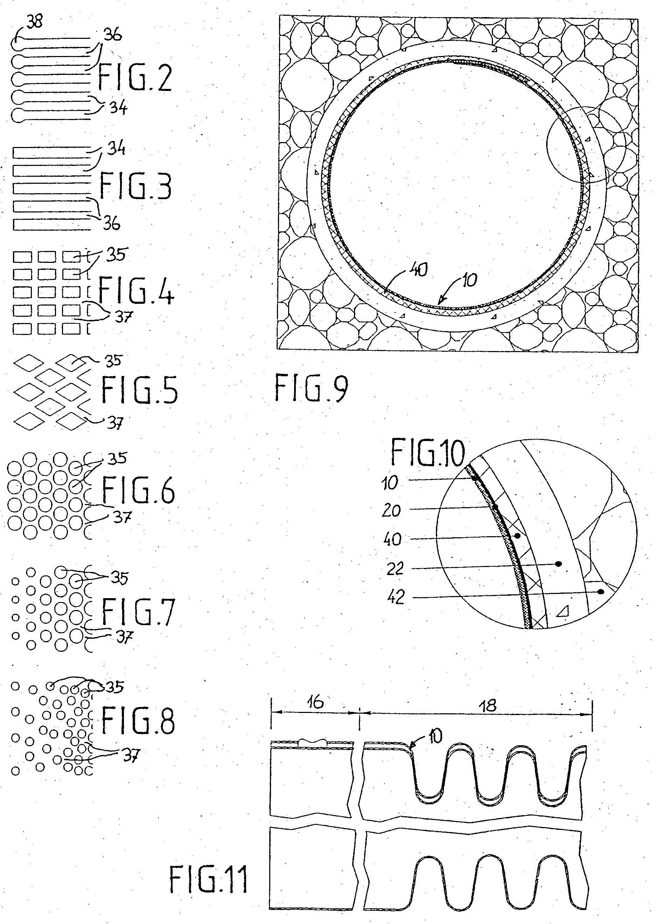

Wie sich aus FIG. 2 ergibt enden die Schlitze 34 in kreisförmig konturierten Erweiterungen. Die Stege 36 haben zwischen den Erweiterungen 38 ihre schmalste Stelle und ihren größten gegenseitigen Umfangsabstand, so daß hier die leichteste Verformung eintritt. Gemäß FIG. 3 sind die Schlitze 34 von gleichbleibender Breite. Da der Verformungswiderstand des Zwischenabschnittes 18 auf mittlerer Schlitzlänge am kleinsten sein soll, liegt es ausdrücklich auch im Rahmen der Erfindung, die Schlitze 34 im mittleren Bereich des Zwischenabschnittes 18 breiter auszubilden und sich jeweils zu den Schlitzenden hin verjüngen zu lassen, womit die zwischen den Schlitzen gebildeten Stege 36 eine komplementäre Gestalt haben, sich also im Mittelbereich des Zwischenabschnittes 18 am leichtesten verformen können. Dieser Mittelbereich liegt beim praktischen Einsatz in der Position des Rohrversatzes.

In FIG. 4 weist der Zwischenabschnitt 18 ein regelmäßiges Muster rechteckiger Löcher in der Schale 10 auf, wodurch die zwischen den Löchern 35 gebildeten, einander rechtwinklig kreuzenden Stege 37 ein Gitterwerk bilden. Die Stege 37 verlaufen achsparallel und in Umfangsrichtung. In FIG. 5 bestehen die Löcher 35 aus Rauten, wobei sich die verbleibenden Stege 37 unter Winkeln von 30° beidseitig zu achsparallelen Mantellinien erstrecken. FIG. 6 zeigt ein Lochbild mit kreisförmigen Ausstanzungen 35 mit entsprechend komplementären Stegen 37, die ein siebartiges Gebilde darstellen. FIG. 7 veranschaulicht einen Ausschnitt des Zwischenabschnittes 18, bei dem die Löcher 35 zu den Endabschnitten 16 der Schale 10 hin allmählich kleiner werden, was mit einer allmählichen Verbreiterung der Stege 37 einhergeht, mit dem Resultat, daß der Verformungswiderstand des Zwischenabschnittes 18 in dessen Mittelbereich am kleinsten ist und zu den Endabschnitten 16 hin allmählich zunimmt.

FIG. 8 schließlich zeigt ein Lochbild, bei dem zwar Löcher gleicher Größe verwendet werden, die Anordnung jedoch im Zufallsraster z.B. nach Floyd-Steinberg-Diffusion erfolgt und außerdem der Abstand der Löcher 35 in Richtung zu den Endabschnitten 16 der Schale 10 hin größer wird, so daß von der Mitte des Zwischenabschnittes 18 zu den Endabschnitten 16 hin der Verformungswiderstand allmählich zunimmt.

Die Figuren 9 und 10 zeigen die eingebaute Schale 10 mit Dichtmassenauftrag 20 und einer auf dieser aufgebrachten Zweikomponentenklebeschicht 40 auf Epoxydharzbasis innerhalb des Kanalrohres 22, das im Erdbereich 42 eingebettet ist.

FIG. 11 zeigt eine Schale 10, die im Bereich ihrer Endabschnitte 16 zylindrisch ist und im Bereich des Zwischenabschnittes 18 faltenbalgartig ausgebildet ist. Diese fakenbalgartige Ausbildung 44 wird durch konvexe Scheitel 46 und konkave Sohlen 48 gestaltet wobei der Radialabstand zwischen Scheitel 46 und Sohle 48 höchstens 5% des Schalendurchmessers ausmacht. Die Faltenbalgausbildung kann bei einer Metallblechschale durch Prägen erzeugt werden. Es liegt jedoch auch im Rahmen der Erfindung, die Schale 10 mehrteilig auszubilden, so daß z.B. die beiden Endabschnitte 16 aus Metallblech gebogen werden und der verformungsweichere Zwischenabschnitt 18 mit der Faltenbalgausbildung 44 aus Kunststoff besteht, der mit den beiden Endabschnitten 16 verklebt wird.

## Patentansprüche

1. Aufweitbare Schale, insbesondere aus Metallblech, mit einander überlappenden Längsrändern (12, 14) zur innenseitigen Kanalrohrsanierung, wobei die Schale (10) zwei Endabschnitte (16) und einen, diese miteinander zu einem zusammenhängenden Bauteil verbindenden Zwischenabschnitt (18) aufweist und den Endabschnitten (16) jeweils eine, eine Durchmesservergrößerung der Schale (10) zulassende, jedoch in entgegengesetzter Richtung formschlüssig sperrende Sperrverrastung (30, 32) zugeordnet ist, die eine, benachbart eines Längsrandes (14) beginnende und sich in Umfangsrichtung erstreckende Schlitz-/Steganordnung (32) mit achsparallelen Schlitzen und Stegen aufweist, in die ein Abschnitt des anderen Längsrandes (12) der Schale (10) oder eine, von diesem vorstehende Zunge (30) einrastbar ist, **dadurch gekennzeichnet, daß** der Zwischenabschnitt (18) der Schale (10) dem Biegen um ihre Längsachse einen geringeren Verformungswiderstand entgegensetzt als die Endabschnitte (16) der Schale (10).

2. Schale nach Anspruch 1, **dadurch gekennzeichnet, daß** der Verformungswiderstand des Zwischenabschnittes (18) in seinem Mittelbereich am kleinsten ist und zu den Endabschnitten (16) hin zunimmt.

3. Schale nach Anspruch 1 oder 2, **dadurch gekennzeichnet, daß** der Zwischenabschnitt (18) der Schale (10) wenigstens zwei einander angenähert diametral gegenüberliegende Materialschwächungszonen aufweist.

4. Schale nach Anspruch 3, **dadurch gekennzeichnet, daß** die Materialschwächungszonen durch Loch- oder Schlitzstanzungen gebildet sind.

5. Schale nach einem der Ansprüche 1 bis 4, **dadurch gekennzeichnet daß** der Zwischenabschnitt (18) der Schale (10) ein sich ringsum erstreckendes Schlitz- und/oder Lochmuster aufweist, dessen Schlitze oder Löcher (34, 35) ein gitter- oder siebartiges Gebilde darstellen.

6. Schale nach einem der Ansprüche 1 bis 5, **dadurch gekennzeichnet, daß** die Materialstärke des Zwischenabschnittes (18) der Schale (10) wenigstens bereichsweise geringer ist als diejenige der Endabschnitte (16).

7. Schale nach Anspruch 6, **dadurch gekennzeichnet, daß** der Zwischenabschnitt (18) auf wenigstens einer Seite eine Vielzahl von dicht benachbarten Umfangsrillen aufweist.

8. Schale nach einem der Ansprüche 1 bis 7**, dadurch gekennzeichnet, daß** der Zwischenabschnitt (18) der Schale (10) faltenbalgartig ausgebildet ist.

9. Schale nach einem der Ansprüche 4 bis 8, **dadurch gekennzeichnet, daß** das Lochmuster aus achsparallelen Schlitzen (34) besteht.

10. Schale nach Anspruch 9, **dadurch gekennzeichnet, daß** die Enden (38) der Schlitze (34) kreis-, birnen- oder tropfenförmig erweitert sind.
